# EUROPEAN PATENT SPECIFICATION

(11) **EP 3 928 170 B1**
(45) Date of publication and mention of the grant of the patent: **12.11.2025**
(21) Application number: 19769622.2
(22) Date of filing: 29.08.2019
(51) Int. Cl.: G05B 19/418, G06Q 10/0631

(54) **HARNESS ASSEMBLY LINE BALANCING**
LEITUNGSAUSGLEICH EINER KABELBAUMANORDNUNG
ÉQUILIBRAGE DE LIGNE D'ASSEMBLAGE DE FAISCEAU

(30) Priority: 21.03.2019 US 201962821942 P
(43) Date of publication of application: 29.12.2021
(73) Proprietor: Siemens Industry Software Inc., Plano, TX 75024 (US)
(72) Inventor: MADDUKURI, Vikas, WA14 4RB Altrincham (GB); YVON, Jean-Marc, WA15 9HX Hale, Altrincham (GB); COOPER, Andrew Thomas, WA7 1NR Runcorn, Cheshire (GB)
(74) Representative: HKW Intellectual Property PartG mbB
(86) International application number: PCT/US2019/048796
(87) International publication number: WO 2020/190321

(56) References cited:
- WO-A2-01/97093
- US-A- 5 177 688
- US-A- 5 523 960
- US-A1- 2003 181 997
- US-A1- 2016 224 022

## Description

### RELATED APPLICATION

This patent application claims priority to U.S. Provisional Patent Application No. 62/821,942, filed March 21, 2019.

### TECHNICAL FIELD

This application is generally related to electronic design automation and, more specifically, to harness assembly line balancing.

### BACKGROUND

WO 01/97093 A2 discloses a method for automatically creating a work plan for the manufacture of a product consisting of several components, for example a wiring harness, with the following steps: a) providing a product data model of the product, in which each component is described by a partial data record containing a classification feature, b) providing a database, the data records contained therein being divided into classes according to the classification feature, wherein each class contains one or more selection rules, with each selection rule being associated with an indexed manufacturing sub-process, and each manufacturing sub-process containing one or more operations, c) automatic selection of the class applicable to the component based on the classification characteristic, d) automatic selection of a suitable manufacturing sub-processes by means of the selection rule, e) automatic determination of the sequence of the manufacturing sub-processes based on the respective index.
US 5 177 688 A discloses an assembly line balancer which groups tasks of multi-sided, mixed model assembly lines on the basis of per side and per model constraints. Resulting compound tasks involve less computational time and power in balancing the line.
US 2016/224022 A1 discloses a system implementing tools and mechanisms to generate a structured bill of materials for a wire harness described in a harness design, identify variable parameter corresponding to a physical characteristic for a first sub-assembly in the structured bill of materials for the wire harness, and substitute the first sub-assembly in the structured bill of materials for the wire harness with a second sub-assembly based, at least in part, on the variable parameter for the first sub-assembly.
US 5 523 960 A discloses an evaluation method of assembly sequences including the steps of designing an assembly composed of a plurality of parts; preparing a component relation diagram (CRD) indicating the joint relation between the plurality of parts; reducing assembly sequences containing infeasible subassemblies by computing weights of all the subassemblies in the respective processes of an AND/OR tree structure of the assembly; evaluating feasible assembly sequences obtained from the CRD by an evaluation function; and performing assembly in the assembly sequences depending on the evaluation result.
Modern manufacture of wire harnesses is often performed through a sequence of steps, rather than as a single operation from a collection of basic components. For example, the manufacture of a wire harness can include components, such as connectors, wires, tapes and tubes, or the like, which can be variously manufactured into one or more sub-assemblies. These sub-assemblies can then be combined together, sometimes along with additional components, to form additional sub-assemblies. This process of sub-assembly construction from other sub-assemblies and/or components can continue until a wire harness has been built. In order to identify this sequence of manufacturing steps during the design phase, some design tools can convert harness designs into a Structured Bill of Materials (SBOM) that describes the sequential manufacturing process in a hierarchical manner.

Many manufacturers distribute the construction of assemblies or sub-assemblies, for example, using a production line or assembly line having an ordered line of workstations to perform operations having one or more tasks in the sequential manufacturing process. In order to reduce manufacturing time and cost for a production line, the tasks associated with the operations can be assigned to workstations in a balanced manner, commonly called line balancing, which can load the workstations with tasks so they have approximately the same amount of cumulative time to perform their assigned tasks. This manual balancing of the tasks across the different workstations, however, can be complex as task performance often depends on performance of one or more other tasks or materials. This complexity increases as manufacturers utilize the same production line to build variants of an assembly or sub-assembly in an attempt to reduce manufacturing time and cost. Since each variant has a different SBOM and corresponding tasks, the line balancing among workstations to perform the tasks associated with all of the SBOMs becomes an increasingly difficult, time-consuming, and error-prone manual process, often taking several weeks to complete. When manufacturers receive harness design changes or add new harness variants to the production lines, the line balancing process iterates and often becomes a manufacturing bottleneck.

### SUMMARY

The invention is defined through the appended claims.

This application discloses a computing system implementing a line balancing tool to generate a structured bill of materials for a wire harness based on a harness design and available fabrication processes. The computing system implementing the line balancing tool can decompose the structured bill of materials into tasks and assign the tasks to workstations in a production line configured to manufacture the wire harness. The computing system implementing the line balancing tool can determine dependencies between a plurality of the tasks and verify the tasks assigned to the workstation conform to the dependencies between the plurality of the tasks. The dependencies can indicate an order for performance of the operations associated with the tasks. The computing system implementing the line balancing tool can identify unassigned tasks capable of assignment to one or more of the workstations and determine which of the workstations the unassigned assembly tasks, if assigned, would conform with the dependencies between the plurality of the assembly tasks. The computing system implementing the line balancing tool can generate work instructions for each of the workstations in the production line. The work instructions describe operations corresponding to the assembly tasks assigned to the workstations. Embodiments of will be described below in greater detail.

### DESCRIPTION OF THE DRAWINGS

Figures 1 and 2 illustrate an example of a computer system of the type that may be used to implement various embodiments.
Figure 3 illustrates an example harness manufacturing environment having a production line with multiple sequential workstations according to various embodiments.
Figure 4 illustrates an example line balancing tool to assign tasks to workstations in a production line according to various embodiments.
Figure 5 illustrates an example representation of structured bill of materials for a wire harness according to various embodiments.
Figure 6 illustrates an example flow diagram for the generation of an assembly task from a task definition according to various embodiments.
Figures 7A and 7B show example representations of dependencies between assembly tasks and task dependency rules according to various embodiments.
Figure 8 illustrates a line balancing table showing assembly tasks and associated cumulative task time assigned to workstations according to various embodiments.
Figure 9 illustrates a flowchart showing example line balancing for workstations in a production line according to various embodiments.

### DETAILED DESCRIPTION

### Illustrative Operating Environment

The execution of various electronic design automation processes according to embodiments may be implemented using computer-executable software instructions executed by one or more programmable computing devices. Because these embodiments may be implemented using software instructions, the components and operation of a generic programmable computer system on which various embodiments may be employed will first be described. Further, because of the complexity of some electronic design automation processes and the large size of many circuit designs, various electronic design automation tools are configured to operate on a computing system capable of simultaneously running multiple processing threads.

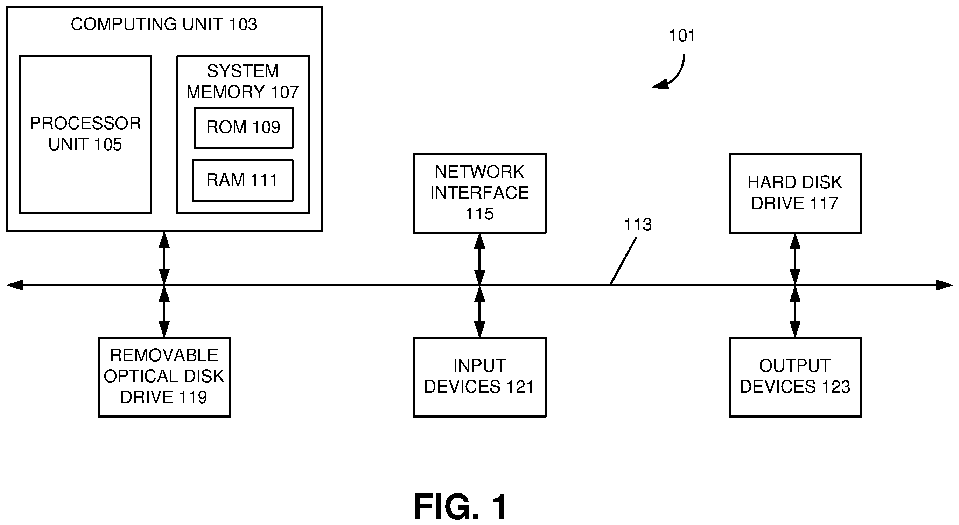

Various examples may be implemented through the execution of software instructions by a computing device, such as a programmable computer. Accordingly, Figure 1 shows an illustrative example of a computing device 101. As seen in this figure, the computing device 101 includes a computing unit 103 with a processor unit 105 and a system memory 107. The processor unit 105 may be any type of programmable electronic device for executing software instructions, but will conventionally be a microprocessor. The system memory 107 may include both a read-only memory (ROM) 109 and a random access memory (RAM) 111. As will be appreciated by those of ordinary skill in the art, both the read-only memory (ROM) 109 and the random access memory (RAM) 111 may store software instructions for execution by the processor unit 105.

The processor unit 105 and the system memory 107 are connected, either directly or indirectly, through a bus 113 or alternate communication structure, to one or more peripheral devices. For example, the processor unit 105 or the system memory 107 may be directly or indirectly connected to one or more additional memory storage devices, such as a "hard" magnetic disk drive 115, a removable magnetic disk drive 117, a removable optical disk drive 119, or a flash memory card. The processor unit 105 and the system memory 107 also may be directly or indirectly connected to one or more input devices 121 and one or more output devices 123. The input devices 121 may include, for example, a keyboard, a pointing device (such as a mouse, touchpad, stylus, trackball, or joystick), a scanner, a camera, and a microphone. The output devices 123 may include, for example, a monitor display, a printer and speakers. With various examples of the computer 101, one or more of the peripheral devices 115-125 may be internally housed with the computing unit 103. Alternately, one or more of the peripheral devices 115-125 may be external to the housing for the computing unit 103 and connected to the bus 113 through, for example, a Universal Serial Bus (USB) connection.

With some implementations, the computing unit 103 may be directly or indirectly connected to at least one network interfaces 115 for communicating with other devices making up a network. The network interface 115 translates data and control signals from the computing unit 103 into network messages according to one or more communication protocols, such as the transmission control protocol (TCP) and the Internet protocol (IP). Also, the network interface 115 may employ any suitable connection agent (or combination of agents) for connecting to a network, including, for example, a wireless transceiver, a modem, or an Ethernet connection. Such network interfaces and protocols are well known in the art, and thus will not be discussed here in more detail.

It should be appreciated that the computer 101 is illustrated as an example only, and it not intended to be limiting. Various embodiments may be implemented using one or more computing devices that include the components of the computer 101 illustrated in Figure 1, which include only a subset of the components illustrated in Figure 1, or which include an alternate combination of components, including components that are not shown in Figure 1. For example, various embodiments may be implemented using a multi-processor computer, a plurality of single and/or multiprocessor computers arranged into a network, or some combination of both.

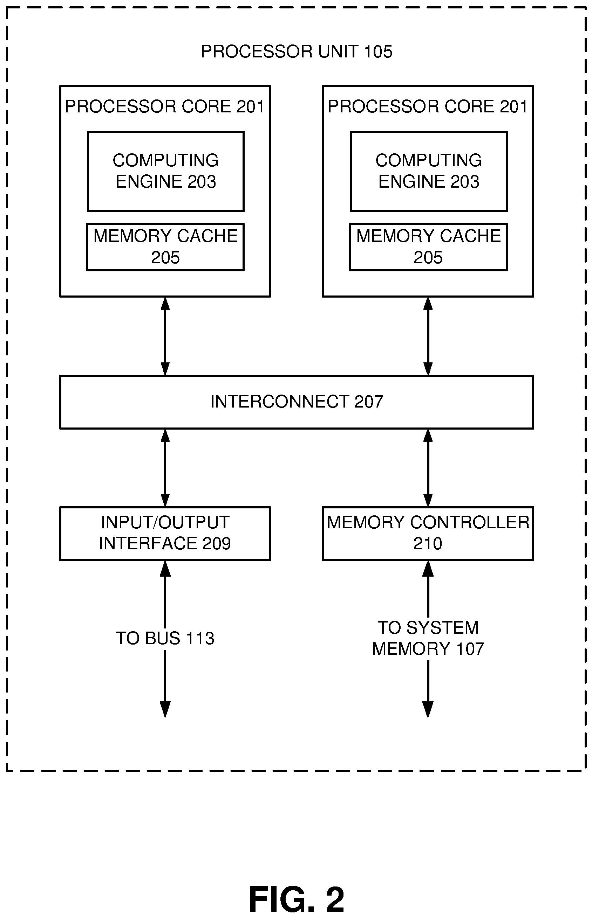

With some implementations, the processor unit 105 can have more than one processor core. Accordingly, Figure 2 illustrates an example of a multi-core processor unit 105 that may be employed with various embodiments. As seen in this figure, the processor unit 105 includes a plurality of processor cores 201. Each processor core 201 includes a computing engine 203 and a memory cache 205. As known to those of ordinary skill in the art, a computing engine contains logic devices for performing various computing functions, such as fetching software instructions and then performing the actions specified in the fetched instructions. These actions may include, for example, adding, subtracting, multiplying, and comparing numbers, performing logical operations such as AND, OR, NOR and XOR, and retrieving data. Each computing engine 203 may then use its corresponding memory cache 205 to quickly store and retrieve data and/or instructions for execution.

Each processor core 201 is connected to an interconnect 207. The particular construction of the interconnect 207 may vary depending upon the architecture of the processor unit 201. With some processor cores 201, such as the Cell microprocessor created by Sony Corporation, Toshiba Corporation and IBM Corporation, the interconnect 207 may be implemented as an interconnect bus. With other processor units 201, however, such as the Opteron^{™} and Athlon^{™} dual-core processors available from Advanced Micro Devices of Sunnyvale, California, the interconnect 207 may be implemented as a system request interface device. In any case, the processor cores 201 communicate through the interconnect 207 with an input/output interface 209 and a memory controller 210. The input/output interface 209 provides a communication interface between the processor unit 201 and the bus 113. Similarly, the memory controller 210 controls the exchange of information between the processor unit 201 and the system memory 107. With some implementations, the processor units 201 may include additional components, such as a high-level cache memory accessible shared by the processor cores 201.

It also should be appreciated that the description of the computer network illustrated in Figure 1 and Figure 2 is provided as an example only, and it not intended to suggest any limitation as to the scope of use or functionality of alternate embodiments.

### Illustrative Harness Manufacturing Environment

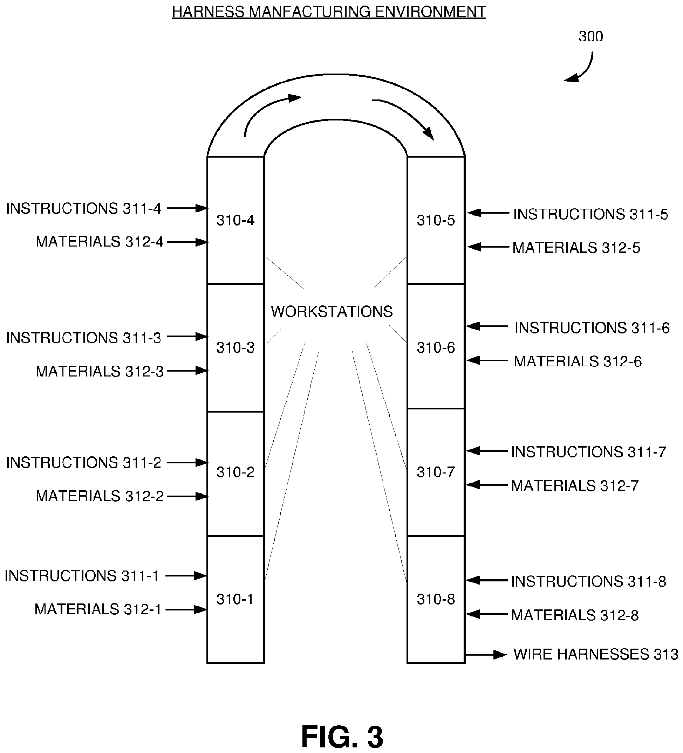

Figure 3 illustrates an example harness manufacturing environment having a production line 300 according to various embodiments. Referring to Figure 3, the production line 300 in the harness manufacturing environment can allow operators at multiple workstations 310-1 to 310-8 to build at least one different type of wire harness 313. The multiple workstations 310-1 to 310-8 can be arranged in a sequential order, which can allow each work station to perform different tasks that assemble wire harnesses 313.

Each workstation 310-1 to 310-8 can receive instructions 311-1 to 311-8, respectively, which can identify a sequential order of tasks to be performed at the workstations 310-1 to 310-8. The workstations 310-1 to 310-8 also can receive materials 312-1 to 312-8, respectively, which the operators at the workstations 310-1 to 310-8 can utilize to perform the tasks described in the instructions 311-1 to 311-8.

The manufacture of the wire harnesses 313 can begin at the workstation 310-1 with an operator utilizing materials 312-1 to build a portion of the wire harness 313 according to the instructions 311-1. The portion of the wire harness 313 built at the workstation 310-1 can be advanced to the workstation 310-2. In some embodiments, the harness manufacturing environment can include a conveyor to advance the portions of the wire harnesses 313 between the workstations 310-1 to 310-8, for example, after a predetermined elapsed time. At workstation 310-2, another operator can add to the portion of the wire harness 313 with the materials 312-2 according to the instructions 311-2 before advancing to workstation 310-3. At workstation 310-3, another operator can add to the portion of the wire harness 313 with the materials 312-3 according to the instructions 311-3 before advancing to workstation 310-4. At workstation 310-4, another operator can add to the portion of the wire harness 313 with the materials 312-4 according to the instructions 311-4 before advancing to workstation 310-5. At workstation 310-5, another operator can add to the portion of the wire harness 313 with the materials 312-5 according to the instructions 311-5 before advancing to workstation 310-6. At workstation 310-6, another operator can add to the portion of the wire harness 313 with the materials 312-6 according to the instructions 311-6 before advancing to workstation 310-7. At workstation 310-7, another operator can add to the portion of the wire harness 313 with the materials 312-7 according to the instructions 311-7 before advancing to workstation 310-8. At workstation 310-8, another operator can finalize the wire harness 313 with the addition of the materials 312-8 according to the instructions 311-8.

### Harness Assembly Line Balancing

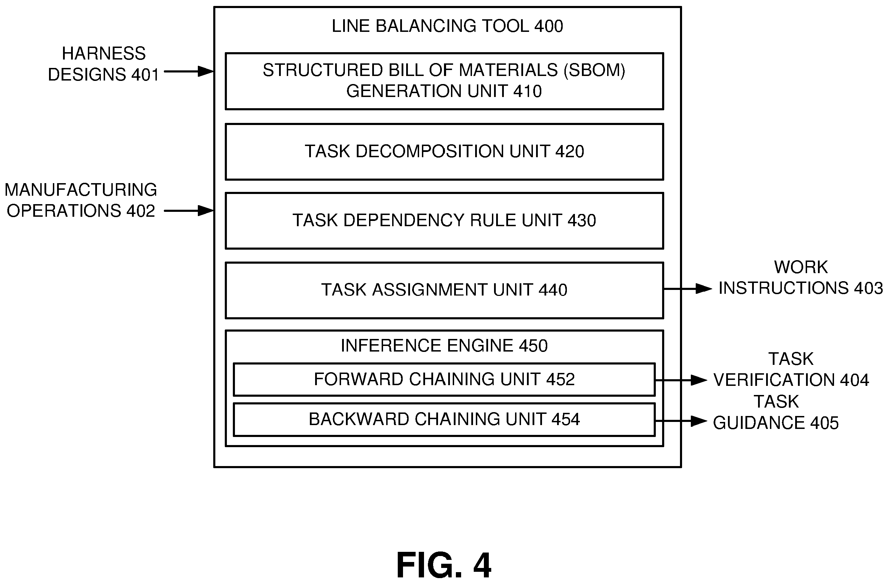

Figure 4 illustrates an example line balancing tool 400 to assign tasks to workstations in a production line according to various embodiments. Referring to Figure 4, the line balancing tool 400 can be implemented by a computing system or computer, such as computing device 101 shown in Figure 1. The line balancing tool 400 can generate workstation instructions 403, which can assign a sequence of tasks to be performed at multiple workstations in a production line. The line balancing tool 400 can receive harness designs 401 describing one or more wire harnesses. For example, each of the harness designs 401 can describe components in a corresponding wire harness, physical attributes of the wire harness or components, connectivity of the wire harness or components, relative orientation of the components to each other in the wire harness, or the like.

The line balancing tool 400 also can receive manufacturing operations 402, sometimes called a Structured Bill of Materials (SBOM) pattern, which can describe a set of fabrication techniques available to a manufacturer. For example, certain manufacturers may have equipment capable of generating or modifying components or sub-assemblies with particular specifications, which can be specified in the manufacturing operations 402. In some embodiments, the manufacturing operations 402 can be a manufacturing program model describing operations that can be performed to build a wire harness based on a manufacturing capability of the manufacturer.

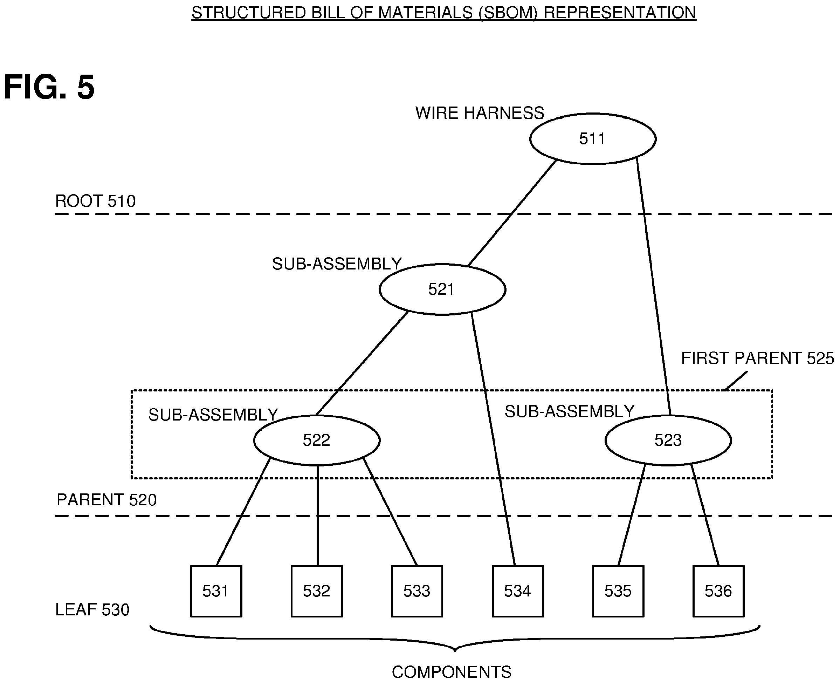

The line balancing tool 400 can generate multiple structured bills of materials from the harness designs 401 and the manufacturing operations 402. In some embodiments, the structured bills of materials can represent the wire harnesses described in the harness designs 401 as trees of sub-assemblies and components. The connectivity of the trees can represent manufacturing processes for building the wire harnesses from the components and sub-assemblies. In some embodiments, the structured bills of materials can represent the wire harnesses hierarchically, for example, the trees can include a description of a sub-assembly being built with one or more of the other sub-assemblies. An example of a structured bill of materials is described below with reference to Figure 5.

Figure 5 illustrates an example representation of structured bill of materials (SBOM) for a wire harness 511 according to various embodiments. Referring to Figure 5, the structured bill of materials for the wire harness 511 can be represented as a tree-structure having multiple manufacturing stages, such as a root stage 510, a parent stage 520, and a leaf stage 530. A top-level manufacturing stage, or the root stage 510, can correspond to a fully-built version of the wire harness 511. The parent stage 520 can include one more sub-assemblies, such as sub-assemblies 521-523, which can correspond to an intermediate-level manufacturing stage. The leaf stage 530 can include components 531-536 of the wire harness 511.

The connectivity of the tree for the structured bill of materials for the wire harness 511 can illustrate how the components 531-536 in the leaf stage 530 combine to form different sub-assemblies 521-523 in the parent stage 520. The connectivity of the tree also can illustrate how the sub-assemblies 521-523 in the parent stage 520 can be combined, sometimes along with one or more of the components 531-536 in the leaf stage 530, to form other sub-assemblies and ultimately the wire harness 511 in the root stage 510. In some embodiments, sub-assemblies that are built only with components 531-536, and not other sub-assemblies, such as subassemblies 522 and 523, can be called first parent 525 sub-assemblies.

Referring back to Figure 4, the line balancing tool 400 can include a structured bill of materials (SBOM) generation unit 410 to generate the structured bills of materials from the harness designs 401 and the manufacturing operations 402. The structured bill of materials generation unit 410 can decompose the harness designs 401 into components and various sub-assemblies and organize them in a hierarchical form to represent the manufacturing processes capable of building the wire harnesses described in the harness designs 401 from the components and sub-assemblies. In some embodiments, one or more of the structured bills of materials can be generated by a tool external to the line balancing tool 400 and the line balancing tool 400 can receive the externally-generated structured bills of materials from the external tool.

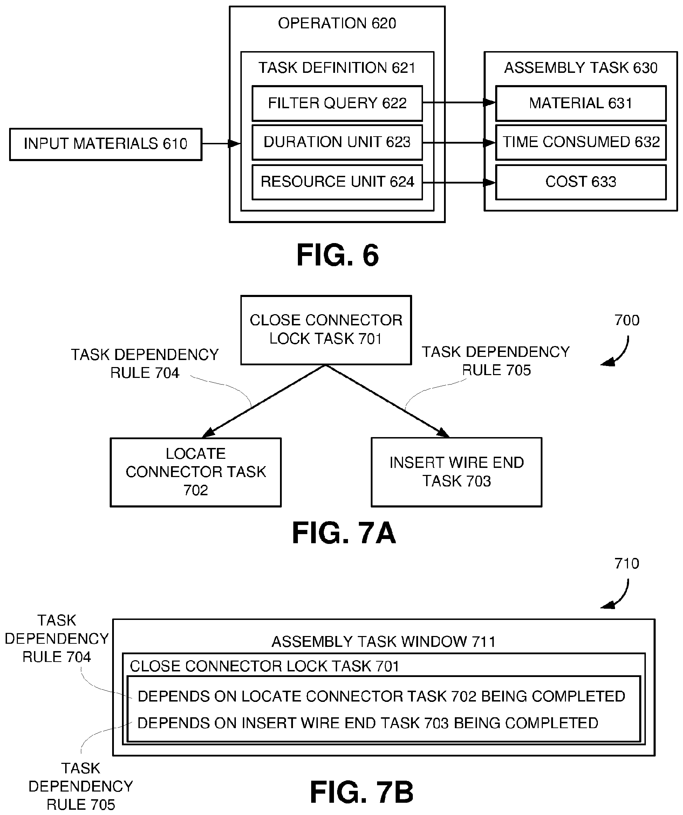

The line balancing tool 400 can include a task decomposition unit 420 to utilize the structured bills of materials to identify tasks that, when performed, can allow for the manufacture of the wire harnesses described in the harness designs 401. In some embodiments, the task decomposition unit 420 can utilize task definitions, for example, described in the structured bills of materials, to generate each of the tasks. Each task definition can describe a task to be performed, identify a type of material that applies to the task, include a time to perform the task or a formula to determine the time to perform the task, and include a resource corresponding to a cost associated with performing the task, such as a monetary cost, resource consumption cost, or the like. Embodiments of task generation from a task definition will be described below in reference to Figure 6.

The task decomposition unit 420 can generate a listing of the tasks that, when performed, can allow for the manufacture of the wire harnesses described in the harness designs 401. In some embodiments, a production line may be configured to support manufacturing of multiple different wire harnesses, for example, variants of each other. The task decomposition unit 420 can consolidate multiple assembly tasks into a consolidated task that represents the assembly tasks, for example, acting on a common material. The consolidated task can describe multiple tasks to be performed, identify a type of material that applies to the tasks, times to perform each of the tasks, costs associated with performing each of the tasks, or the like.

Figure 6 illustrates an example flow diagram for the generation of an assembly task 630 from a task definition 621 according to various embodiments. Referring to Figure 6, an operation 620 can represent a unit of work performed using input materials 610 to produce sub-assembly. In some embodiments, the input materials 610 can include unprocessed harness objects, such as wires, connectors, splices, multicores, or the like, and/or include one or more other sub-assemblies.

The operation 620 can include a task definition 621, which can be utilized along with a description of the input materials 610 to generate an assembly task 630. The assembly task 630 can describe the operation 620 performed with the specific input materials 610. The task definition 621 can include a filter query 622 to define the types of materials utilized to perform operation 620. The filter query 622 can receive the input materials 610 and ascertain whether the input materials 610 can be utilized during the operation 620 based on a set of filter criteria. For example, when the operation 620 corresponds to wire cutting, the filter query 621 could be set to apply the operation 620 on a wire material having given diameter or diameter range. When the input materials 610 describe a material or multiple materials that fall within the set of filter criteria, the material or materials can included in the assembly task 630 as material 631.

The task definition 621 can include a duration unit 623 to determine a time consumed 632 during the performance of the operation 620 with the input materials 610. Since the input materials 610 can vary while still satisfying the filter query 622, the duration unit 623 can identify the time consumed 632 based on which type of input materials 610 were applied to the task definition 621. In some embodiments, the duration unit 623 may include an algorithm having a variable that can be set based on at least one characteristic of the input materials 610, which the duration unit 623 can utilize to calculate or select the time consumed 632 for the assembly task 630.

The task definition 621 can include a resource unit 624 to define resources consumed by the operation 620, such as money, power, or the like. The resource unit 624 can include a resource factor to identify one or more resources consumed by the performance of the operation 620, which may vary based on the type of the input materials 610 applied to the task definition 621. The resource unit 624 can generate a cost 633 corresponding to resources consumed by the operation 620 using the input materials 610, which can be included in the assembly task 630.

Referring back to Figure 4, the line balancing tool 400 can include a task dependency rule unit 430 to determine relationships between assembly tasks and determine task material presence, for example, relationships of assembly tasks to materials utilized in the performance of the assembly tasks. In some embodiments, the task definition utilized to generate the assembly tasks can identify the relationships of the generated assembly task to another assembly task or a type of input material utilized in the performance of the generated assembly task. The task dependency rule unit 430 can utilize the identified relationships between assembly tasks or between an assembly task and its corresponding input materials to generate task dependency rules. Each task dependency rule can indicate an order of performance for multiple assembly tasks, for example, a performance of a first task being a predicate to a performance of a second task. Example task dependency rules are shown in Figures 7A and 7B.

Figures 7A and 7B show example representations of dependencies between assembly tasks 701-703 and task dependency rules 704 and 705 according to various embodiments. Referring to Figures 7A and 7B, representations 700 and 710 show dependencies between multiple assembly tasks 701-703 utilizing the dependency rules 704 and 705. The representation 700 can be a dependency graph showing a performance of a close connector lock task 701 can be predicated on a prior performance of a locate connector task 702 and an insert wire end task 703. The locate connector task 702 can correspond to a material presence predicate task, as the performance of the locate connector task 702 can result in the connector having been located. The insert wire end task 703 can correspond to an operation predicate task, as the performance of the insert wire end task 703 can result in a wire end having been inserted into the connector prior to the connector being closed. The vertices of the dependency graph can correspond to the task dependency rules generated for the dependent relationship between the assembly tasks 701-703. The task dependency rule 704 can describe a dependent relationship between the close connector lock task 701 and the locate connector task 702. The task dependency rule 705 can describe a dependent relationship between the close connector lock task 701 and the insert wire end task 703.

The representation 710 can correspond to an assembly task window 711, for example, in a table view, which can be presented on a display device of a computing system. The assembly task window 711 can show the task dependency rules 704 and 705 for the close connector lock task 701 in written form. In some examples, the task dependency rule 704 can state "depends on locate connector task 702 being completed" and the task dependency rule 705 can state "depends on insert wire end task 703 being completed."

Referring back to Figure 4, the line balancing tool 400 can include a task assignment unit 440 to assign the assembly tasks or consolidated tasks to workstations. Each workstation can be a located in a production line or assembly line having an ordered line of the workstations to perform operations having one or more assembly tasks in a sequential manufacturing process. In some embodiments, the task assignment unit 440 can assign the assembly tasks or consolidated tasks to the different workstations in response to user input. For example, the computing system implementing the line balancing tool 400 can receive user selections of assembly tasks for workstations, such as through a user interface device, and the task assignment unit 440 can assign the assembly tasks to the workstations.

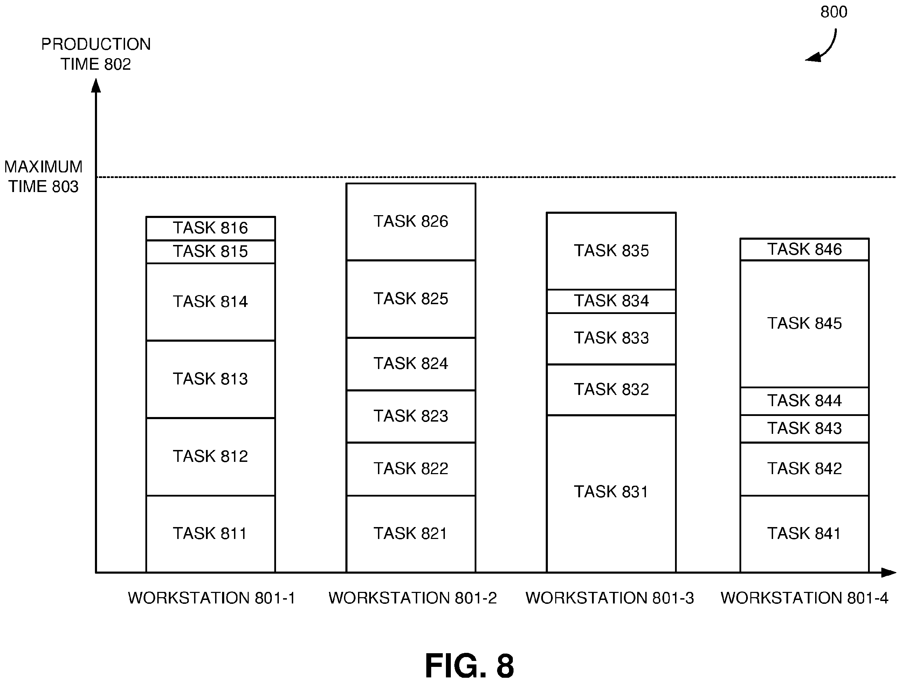

The task assignment unit 440 can generate an assignment presentation, such as a line balancing table showing production time consumed due to performance of each task and a cumulative total production time consumed at each workstation for all of the tasks assigned to the workstation. An example line balancing table will be illustrated with reference to Figure 8. When the production line is configured for manufacturing wire harnesses for multiple different harness designs, the task assignment unit 440 also can generate an assignment presentation to show time consumed at each workstation for each of the different wire harnesses.

Figure 8 illustrates a line balancing table 800 showing assembly tasks and associated cumulative task time assigned to workstations according to various embodiments. Referring to Figure 8, the line balancing table 800 can include different workstations 801-1 to 801-4 of a production line capable of being assigned with assembly tasks, such as tasks 811-816, 821-826, 831-835, and 841-846, respectively. The tasks 811-816, 821-826, 831-835, and 841-846, when assigned, can be represented in a bar chart above their corresponding workstations 801-1 to 801-4 based on the time consumed to perform the tasks 811-816, 821-826, 831-835, and 841-846.

The line balancing table 800 also shows a production time 802 consumed due to performance of each task 811-816, 821-826, 831-835, and 841-846 and a cumulative total production time consumed at each workstation 801-1 to 801-4 for all of the tasks 811-816, 821-826, 831-835, and 841-846 assigned to each workstation 801-1 to 801-4. The line balancing table 800 also can include a maximum time 803 indicator, which can identify an amount of production time available for the workstations 801-1 to 801-4.

Referring back to Figure 4, the task assignment unit 440 can utilize an inference engine 450 in the assignment of assembly tasks or consolidated tasks to the workstations in a production line. For example, the task assignment unit 440 can utilize the inference engine 450 to analyze the assignment of the assembly tasks or consolidated tasks to the workstations based on the task dependency rules for the assembly tasks or consolidated tasks. The inference engine 450 can utilize the task dependency rules to generate a task dependency network, which can identify a sequential order for tasks to be performed for the different wire harnesses to be built. In some embodiments, task dependency rule unit 430 can prompt the inference engine 450 to generate the task dependency network.

The inference engine 450 can include a forward chaining unit 452 to generate task verification 404 for assembly tasks or consolidated tasks assigned to workstations. In some embodiments, the forward chaining unit 452 can verify whether assembly tasks or consolidated tasks assigned to workstations by the task assignment unit 440 violate task dependency rules. For example, when assembly tasks or consolidated tasks are assigned to workstations out-of-sequence, which could render the wire harness unbuildable in the production line, the forward chaining unit 352 can determine the assembly tasks or consolidated tasks were assigned to workstations out-of-order or misordered within a workstation.

The forward chaining unit 452 can compare the assembly tasks or consolidated tasks to their corresponding dependent assembly tasks or consolidated tasks using the task dependency network or the task dependency rules directly and issue an indication of the task dependency violation. In some embodiments, the forward chaining unit 452 can notify the task assignment unit 440 of the dependency-based violation of an assigned assembly task or consolidated task, which the task assignment unit 440 can utilize in a presentation or graphical user interface to a user of the line balancing tool 400.

The inference engine 450 can include a backward chaining unit 454 to generate task guidance 405 for assembly tasks or consolidated tasks yet to be assigned to workstations. The task guidance 405 can identify which unassigned assembly tasks or unassigned consolidated tasks can be assigned to each workstation based on any previously assigned assembly tasks or consolidated tasks. In some embodiments, the backward chaining unit 454 can utilize the task dependency network to identify which of the assigned assembly tasks or assigned consolidated tasks have dependencies to unassigned assembly tasks or unassigned consolidated tasks and generate the task guidance 405 based on the identified dependencies. For example, when a task has been assigned to workstation 2, the backward chaining unit 454 can identify any unassigned tasks that depend on performance of the assigned task and generate task guidance 405 that the unassigned tasks can be assigned to be performed after the assigned task, such as in a subsequent workstation or after the assigned task in workstation 2. In some embodiments, the backward chaining unit 454 can notify the task assignment unit 440 of the dependency-based guidance for unassigned tasks, which the task assignment unit 440 can utilize in a presentation or graphical user interface to a user of the line balancing tool 400.

After the assembly tasks or consolidated tasks have been assigned to workstations by the task assignment unit 440 and the inference engine 450 has verified their dependencies, the line balancing tool 400 can modify the structured bills of materials generated from the harness designs 401 and the manufacturing operations 402 based on the workstation assignments of the assembly tasks or consolidated tasks. The line balancing tool 400 can generate the workstation instructions 403 from the modified structured bills of materials, which can describe the operations to be performed at the workstations in the production line based on the assembly tasks or consolidated tasks assigned to the workstations during the line balancing process.

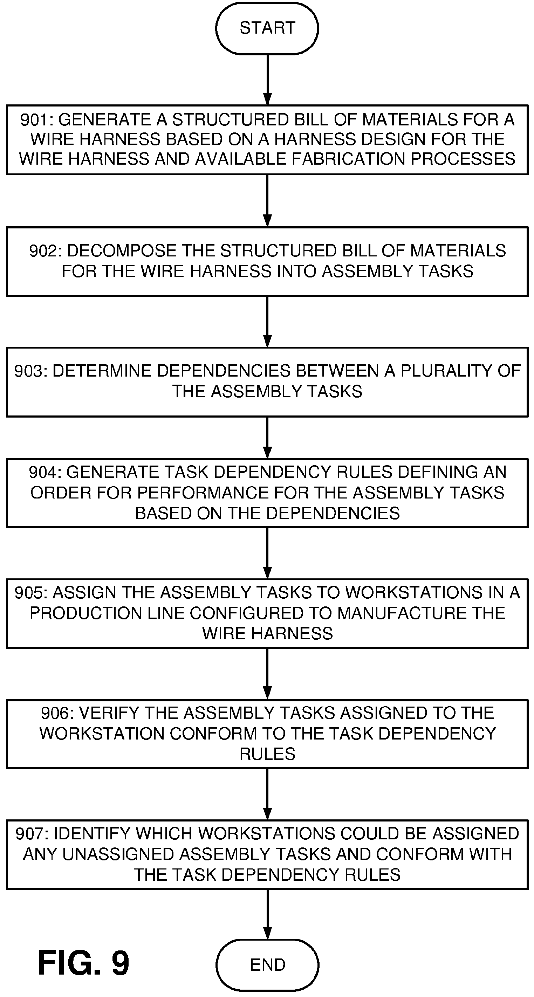

Figure 9 illustrates a flowchart showing example line balancing for workstations in a production line according to various embodiments. Referring to Figure 9, in a block 901, a computing system implementing a line balancing tool can generate a structured bill of materials for a wire harness based on a harness design for the wire harness and available fabrication processes. In some embodiments, the structured bill of materials can represent the wire harness described in the harness design as trees of sub-assemblies and components. The connectivity of the trees can represent manufacturing processes for building the wire harnesses from the components and sub-assemblies. In some embodiments, the structured bill of materials can represent the wire harness hierarchically, for example, the trees can include a description of a sub-assembly being built with one or more of the other sub-assemblies.

The computing system implementing the line balancing tool can receive manufacturing operations describing a set of fabrication techniques available to a manufacturer. For example, certain manufacturers may have equipment capable of generating or modifying components or sub-assemblies with particular specifications, which can be specified in the manufacturing operations. In some embodiments, the manufacturing operations can be a manufacturing program model describing operations that can be performed to build a wire harness based on a manufacturing capability of the manufacturer.

The computing system implementing the line balancing tool can divide the harness design into components and various sub-assemblies, and organize them in a hierarchical form to represent the manufacturing processes capable of building the wire harness described in the harness design from the components and sub-assemblies.

In a block 902, the computing system implementing the line balancing tool can decompose the structured bill of materials for the wire harness into assembly tasks.

The computing system implementing the line balancing tool can utilize the structured bill of materials to identify tasks that, when performed, can allow for the manufacture of the wire harness described in the harness design. In some embodiments, the computing system implementing the line balancing tool can utilize task definitions, for example, described in the structured bills of materials, to generate each of the tasks. Each task definition can describe a task to be performed, identify a type of material that applies to the task, include a time to perform the task or a formula to determine the time to perform the task, and include a resource corresponding to a cost associated with performing the task, such as a monetary cost, resource consumption cost, or the like.

The computing system implementing the line balancing tool can generate a listing of the tasks that, when performed, can allow for the manufacture of the wire harness described in the harness design. In some embodiments, a production line may be configured to support manufacturing of multiple different wire harnesses, for example, variants of each other. The computing system implementing the line balancing tool can consolidate multiple assembly tasks into a consolidated task that represents the assembly tasks, for example, acting on a common material. The consolidated task can describe multiple tasks to be performed, identify a type of material that applies to the tasks, times to perform each of the tasks, costs associated with performing each of the tasks, or the like.

In a block 903, the computing system implementing the line balancing tool can determine dependencies between a plurality of the assembly tasks and, in a block 904, the computing system implementing the line balancing tool can generate task dependency rules defining an order for performance for the assembly tasks based on the dependencies. The computing system implementing the line balancing tool can determine relationships between assembly tasks and determine task material presence, for example, relationships of assembly tasks to materials utilized in the performance of the assembly tasks. In some embodiments, the task definition utilized to generate the assembly tasks can indicate the relationships of the generated assembly task to another assembly task or a type of input material utilized in the performance of the generated assembly task. The computing system implementing the line balancing tool can utilize the identified relationships between assembly tasks or between an assembly task and its corresponding input materials to generate task dependency rules. Each task dependency rule can indicate an order of performance for multiple assembly tasks, for example, a performance of a first task being a predicate to a performance of a second task.

In a block 905, the computing system implementing the line balancing tool can assign the assembly tasks to workstations in a production line configured to manufacture the wire harness. The computing system implementing the line balancing tool can assign the assembly tasks or consolidated tasks to workstations. Each workstation can be located in a production line or assembly line having an ordered line of the workstations to perform operations having one or more assembly tasks in a sequential manufacturing process. **In** some embodiments, the computing system implementing the line balancing tool can assign the assembly tasks or consolidated tasks to the different workstations in response to user input.

**In** some embodiments, the computing system implementing the line balancing tool can generate an assignment presentation, such as a line balancing table showing production time consumed due to performance of each task and a cumulative total production time consumed at each workstation for all of the tasks assigned to the workstation. When the production line is configured for manufacturing wire harnesses for multiple different harness designs, the task assignment unit 440 also can generate an assignment presentation to show time consumed at each workstation for each of the different wire harnesses.

**In** a block 906, the computing system implementing the line balancing tool can verify that the assembly tasks assigned to the workstation conform to the task dependency rules. For example, when assembly tasks or consolidated tasks are assigned to workstations out-of-sequence, which could render the wire harness unbuildable in the production line, the computing system implementing the line balancing tool can determine the assembly tasks or consolidated tasks were assigned to workstations out-of-order or misordered within a workstation. **In** some embodiments, the computing system implementing the line balancing tool can generate a task dependency rule network, which can define the dependencies between the assembly tasks, and then utilize the task dependency rule network to determine whether the assembly tasks were assigned to the workstations in order. When the computing system implementing the line balancing tool determines the assembly tasks were assigned out-of-order, the computing system implementing the line balancing tool can issue a violation message. **In** some embodiments, the computing system implementing the line balancing tool can present the violation message on the assignment presentation, for example, indicating the particular assembly task assigned out-of-order.

In a block 907, the computing system implementing the line balancing tool can identify which workstations could be assigned any unassigned assembly tasks and conform with the task dependency rules. The computing system implementing the line balancing tool can generate task guidance for assembly tasks or consolidated tasks yet to be assigned to workstations. The task guidance can identify which unassigned assembly tasks or unassigned consolidated tasks can be assigned to each workstation based on any previously assigned assembly tasks or consolidated tasks. In some embodiments, the computing system implementing the line balancing tool can utilize the task dependency network to identify which of the assigned assembly tasks or assigned consolidated tasks have dependencies to unassigned assembly tasks or unassigned consolidated tasks and generate the task guidance based on the identified dependencies. In some embodiments, the computing system implementing the line balancing tool can issue a notification of the task guidance, for example, in a presentation or graphical user interface to a user of the line balancing tool.

The system and apparatus described above may use dedicated processor systems, micro controllers, programmable logic devices, microprocessors, or any combination thereof, to perform some or all of the operations described herein. Some of the operations described above may be implemented in software and other operations may be implemented in hardware. Any of the operations, processes, and/or methods described herein may be performed by an apparatus, a device, and/or a system substantially similar to those as described herein and with reference to the illustrated figures.

The processing device may execute instructions or "code" stored in memory. The memory may store data as well. The processing device may include, but may not be limited to, an analog processor, a digital processor, a microprocessor, a multi-core processor, a processor array, a network processor, or the like. The processing device may be part of an integrated control system or system manager, or may be provided as a portable electronic device configured to interface with a networked system either locally or remotely via wireless transmission.

The processor memory may be integrated together with the processing device, for example RAM or FLASH memory disposed within an integrated circuit microprocessor or the like. In other examples, the memory may comprise an independent device, such as an external disk drive, a storage array, a portable FLASH key fob, or the like. The memory and processing device may be operatively coupled together, or in communication with each other, for example by an I/O port, a network connection, or the like, and the processing device may read a file stored on the memory. Associated memory may be "read only" by design (ROM) by virtue of permission settings, or not. Other examples of memory may include, but may not be limited to, WORM, EPROM, EEPROM, FLASH, or the like, which may be implemented in solid state semiconductor devices. Other memories may comprise moving parts, such as a known rotating disk drive. All such memories may be "machine-readable" and may be readable by a processing device.

Operating instructions or commands may be implemented or embodied in tangible forms of stored computer software (also known as "computer program" or "code"). Programs, or code, may be stored in a digital memory and may be read by the processing device. "Computer-readable storage medium" (or alternatively, "machine-readable storage medium") may include all of the foregoing types of memory, as well as new technologies of the future, as long as the memory may be capable of storing digital information in the nature of a computer program or other data, at least temporarily, and as long at the stored information may be "read" by an appropriate processing device. The term "computer-readable" may not be limited to the historical usage of "computer" to imply a complete mainframe, mini-computer, desktop or even laptop computer. Rather, "computer-readable" may comprise storage medium that may be readable by a processor, a processing device, or any computing system. Such media may be any available media that may be locally and/or remotely accessible by a computer or a processor, and may include volatile and non-volatile media, and removable and non-removable media, or any combination thereof.

A program stored in a computer-readable storage medium may comprise a computer program product. For example, a storage medium may be used as a convenient means to store or transport a computer program. For the sake of convenience, the operations may be described as various interconnected or coupled functional blocks or diagrams. However, there may be cases where these functional blocks or diagrams may be equivalently aggregated into a single logic device, program or operation with unclear boundaries.

### Conclusion

While the application describes specific examples of carrying out embodiments, those skilled in the art will appreciate that there are numerous variations and permutations of the above described systems and techniques that fall within the scope as set forth in the appended claims. For example, while specific terminology has been employed above to refer to electronic design automation processes, it should be appreciated that various examples may be implemented using any desired combination of electronic design automation processes.

Although the specification may refer to "an", "one", "another", or "some" example(s) in several locations, this does not necessarily mean that each such reference is to the same example(s), or that the feature only applies to a single example.

## Claims

1. A method comprising:
decomposing (902), by a computing system, a structured bill of materials for a wire harness (511) described in a harness design into assembly tasks (630), wherein the assembly tasks (630) describe operations that, when performed, result in the wire harness (511) being manufactured;
determining (903), by the computing system, dependencies between a plurality of the assembly tasks (630), wherein the dependencies are configured to indicate an order for performance of the operations associated with the assembly tasks (630); and
utilizing, by the computing system, the dependencies between the plurality of the assembly tasks (630) during an assignment of the assembly tasks (630) to workstations in a production line (300) configured to manufacture the wire harness (511),
wherein the structured bill of materials for the wire harness (511) includes task definitions and describes types of materials utilized in the wire harness (511), and wherein decomposing (902) the structured bill of materials for the wire harness (511) into the assembly tasks (630) further comprises generating the assembly tasks (630) based, at least in part, on the task definition and the types of materials utilized in the wire harness (511);
wherein determining (903) the dependencies includes utilizing the task definitions to identify relationships of the generated assembly task (630) to another assembly task (630); and
wherein the method further comprises determining, by the computing system, task dependency rules defining the order for performance for the assembly tasks (630) based, at least in part, on the task definitions, wherein the identified relationships between assembly tasks are utilized to generate task dependency rules, and each task dependency rule is indicative of an order of performance for multiple assembly tasks by indicating that a performance of a respective first assembly task is a predicate to a performance of a respective second assembly task.

2. The method of claim 1, further comprising verifying, by the computing system, the assembly tasks (630) assigned to the workstation conform to the dependencies between the plurality of the assembly tasks (630).

3. The method of claim 1, further comprising:
identifying, by the computing system, one or more unassigned assembly tasks (630) capable of assignment to one or more of the workstations; and
determining, by the computing system, which of the workstations the unassigned assembly tasks (630), if assigned, would conform with the dependencies between the plurality of the assembly tasks (630).

4. The method of claim 1, further comprising generating, by the computing system, the structured bill of materials for the wire harness (511) based, at least in part, on the harness design and available fabrication processes.

5. The method of claim 1, further comprising generating, by the computing system, work instructions for each of the workstations in the production line (300), wherein the work instructions describe operations corresponding to the assembly tasks (630) assigned to the workstations.

6. An apparatus including a memory device storing instructions configured to cause one or more processing devices to perform operations comprising:
decomposing a structured bill of materials for a wire harness (511) described in a harness design into assembly tasks (630), wherein the assembly tasks (630) describe operations that, when performed, result in the wire harness (511) being manufactured;
determining dependencies between a plurality of the assembly tasks (630), wherein the dependencies are configured to indicate an order for performance of the operations associated with the assembly tasks (630); and
utilizing the dependencies between the plurality of the assembly tasks (630) during an assignment of the assembly tasks (630) to workstations in a production line (300) configured to manufacture the wire harness (511),
wherein the structured bill of materials for the wire harness (511) includes task definitions and describes types of materials utilized in the wire harness (511), and wherein the instructions are configured to cause one or more processing devices to perform operations further comprising generating the assembly tasks (630) based, at least in part, on the task definition and the types of materials utilized in the wire harness (511);
wherein determining (903) the dependencies includes utilizing the task definitions to identify relationships of the generated assembly task (630) to another assembly task (630); and
wherein the instructions are configured to cause one or more processing devices to perform operations further comprising determining task dependency rules defining the order for performance for the assembly tasks (630) based, at least in part, on the task definitions, wherein the identified relationships between assembly tasks are utilized to generate task dependency rules, and each task dependency rule is indicative of an order of performance for multiple assembly tasks by indicating that a performance of a respective first assembly task is a predicate to a performance of a respective second assembly task.

7. The apparatus of claim 6, wherein the instructions are configured to cause one or more processing devices to perform operations further comprising verifying the assembly tasks (630) assigned to the workstation conform to the dependencies between the plurality of the assembly tasks (630).

8. The apparatus of claim 6, wherein the instructions are configured to cause one or more processing devices to perform operations further comprising:
identifying one or more unassigned assembly tasks (630) capable of assignment to one or more of the workstations; and
determining which of the workstations the unassigned assembly tasks (630), if assigned, would conform with the dependencies between the plurality of the assembly tasks (630).

9. The apparatus of claim 6, wherein the instructions are configured to cause one or more processing devices to perform operations further comprising generating the structured bill of materials for the wire harness (511) based, at least in part, on the harness design and available fabrication processes.

10. The apparatus of claim 6, wherein the instructions are configured to cause one or more processing devices to perform operations further comprising generating work instructions for each of the workstations in the production line (300), wherein the work instructions describe operations corresponding to the assembly tasks (630) assigned to the workstations.

## Patentansprüche

1. Verfahren, umfassend:
Zerlegen (902), durch ein Rechensystem, einer strukturierten Stückliste für einen Kabelbaum (511), der in einem Kabelbaumentwurf beschrieben ist, in Montageaufgaben (630), wobei die Montageaufgaben (630) Operationen beschreiben, die, wenn sie durchgeführt werden, dazu führen, dass der Kabelbaum (511) hergestellt wird;
Bestimmen (903), durch das Rechensystem, von Abhängigkeiten zwischen mehreren der Montageaufgaben (630), wobei die Abhängigkeiten dazu ausgelegt sind, eine Reihenfolge für eine Durchführung der mit den Montageaufgaben (630) assoziierten Operationen anzugeben; und
Verwenden, durch das Rechensystem, der Abhängigkeiten zwischen den mehreren Montageaufgaben (630) während einer Zuweisung der Montageaufgaben (630) zu Arbeitsstationen in einer Produktionslinie (300), die dazu ausgelegt ist, den Kabelbaum (511) herzustellen,
wobei die strukturierte Stückliste für den Kabelbaum (511) Aufgabendefinitionen beinhaltet und Arten von Materialien beschreibt, die in dem Kabelbaum (511) verwendet werden, und wobei das Zerlegen (902) der strukturierten Stückliste für den Kabelbaum (511) in die Montageaufgaben (630) ferner Erzeugen der Montageaufgaben (630) zumindest teilweise basierend auf der Aufgabendefinition und den Arten von in dem Kabelbaum (511) verwendeten Materialien umfasst;
wobei das Bestimmen (903) der Abhängigkeiten Verwenden der Aufgabendefinitionen zum Identifizieren von Beziehungen der erzeugten Montageaufgabe (630) zu einer anderen Montageaufgabe (630) beinhaltet; und
wobei das Verfahren ferner Bestimmen, durch das Rechensystem, von Aufgabenabhängigkeitsregeln, die die Reihenfolge für eine Durchführung für die Montageaufgaben (630) definieren, zumindest teilweise basierend auf den Aufgabendefinitionen umfasst, wobei die identifizierten Beziehungen zwischen Montageaufgaben verwendet werden, um Aufgabenabhängigkeitsregeln zu erzeugen, und jede Aufgabenabhängigkeitsregel eine Reihenfolge einer Durchführung für mehrere Montageaufgaben angibt, indem angegeben wird, dass eine Durchführung einer jeweiligen ersten Montageaufgabe eine Vorstufe für eine Durchführung einer jeweiligen zweiten Montageaufgabe ist.

2. Verfahren nach Anspruch 1, ferner umfassend Verifizieren, durch das Rechensystem, dass die der Arbeitsstation zugewiesenen Montageaufgaben (630) die Abhängigkeiten zwischen den mehreren Montageaufgaben (630) einhalten.

3. Verfahren nach Anspruch 1, ferner umfassend:
Identifizieren, durch das Rechensystem, einer oder mehrerer nicht zugewiesener Montageaufgaben (630), die einer oder mehreren der Arbeitsstationen zugewiesen werden können; und
Bestimmen, durch das Rechensystem, bei welcher der Arbeitsstationen die nicht zugewiesenen Montageaufgaben (630), falls sie zugewiesen würden, die Abhängigkeiten zwischen den mehreren Montageaufgaben (630) einhalten würden.

4. Verfahren nach Anspruch 1, ferner umfassend Erzeugen, durch das Rechensystem, der strukturierten Stückliste für den Kabelbaum (511) zumindest teilweise basierend auf dem Kabelbaumentwurf und verfügbaren Fertigungsprozessen.

5. Verfahren nach Anspruch 1, ferner umfassend Erzeugen, durch das Rechensystem, von Arbeitsanweisungen für jede der Arbeitsstationen in der Produktionslinie (300), wobei die Arbeitsanweisungen Operationen beschreiben, die den den Arbeitsstationen zugewiesenen Montageaufgaben (630) entsprechen.

6. Einrichtung, die eine Speichervorrichtung umfasst, die Anweisungen speichert, die dazu ausgelegt sind, eine oder mehrere Verarbeitungsvorrichtungen zu veranlassen, Operationen durchzuführen, die Folgendes umfassen:
Zerlegen einer strukturierten Stückliste für einen Kabelbaum (511), der in einem Kabelbaumentwurf beschrieben ist, in Montageaufgaben (630), wobei die Montageaufgaben (630) Operationen beschreiben, die, wenn sie ausgeführt werden, dazu führen, dass der Kabelbaum (511) hergestellt wird;
Bestimmen von Abhängigkeiten zwischen mehreren der Montageaufgaben (630), wobei die Abhängigkeiten dazu ausgelegt sind, eine Reihenfolge für eine Durchführung der mit den Montageaufgaben (630) assoziierten Operationen anzugeben; und
Verwenden der Abhängigkeiten zwischen den mehreren Montageaufgaben (630) während einer Zuweisung der Montageaufgaben (630) zu Arbeitsstationen in einer Produktionslinie (300), die dazu ausgelegt ist, den Kabelbaum (511) herzustellen,
wobei die strukturierte Stückliste für den Kabelbaum (511) Aufgabendefinitionen beinhaltet und Arten von Materialien beschreibt, die in dem Kabelbaum (511) verwendet werden, und wobei die Anweisungen dazu ausgelegt sind, eine oder mehrere Verarbeitungsvorrichtungen zu veranlassen, Operationen durchzuführen, die ferner Erzeugen der Montageaufgaben (630) zumindest teilweise basierend auf der Aufgabendefinition und den Arten von in dem Kabelbaum (511) verwendeten Materialien umfassen;
wobei das Bestimmen (903) der Abhängigkeiten Verwenden der Aufgabendefinitionen zum Identifizieren von Beziehungen der erzeugten Montageaufgabe (630) zu einer anderen Montageaufgabe (630) beinhaltet; und
wobei die Anweisungen dazu ausgelegt sind, eine oder mehrere Verarbeitungsvorrichtungen zu veranlassen, Operationen durchführen, die ferner Bestimmen von Aufgabenabhängigkeitsregeln, die die Reihenfolge für eine Durchführung für die Montageaufgaben (630) definieren, zumindest teilweise basierend auf den Aufgabendefinitionen umfassen, wobei die identifizierten Beziehungen zwischen Montageaufgaben verwendet werden, um Aufgabenabhängigkeitsregeln zu erzeugen, und jede Aufgabenabhängigkeitsregel eine Reihenfolge einer Durchführung für mehrere Montageaufgaben angibt, indem angegeben wird, dass eine Durchführung einer jeweiligen ersten Montageaufgabe eine Vorstufe für eine Durchführung einer jeweiligen zweiten Montageaufgabe ist.

7. Einrichtung nach Anspruch 6, wobei die Anweisungen dazu ausgelegt sind, eine oder mehrere Verarbeitungsvorrichtungen zu veranlassen, Operationen durchzuführen, die ferner Verifizieren, dass die der Arbeitsstation zugewiesenen Montageaufgaben (630) die Abhängigkeiten zwischen den mehreren Montageaufgaben (630) einhalten, umfassen.

8. Einrichtung nach Anspruch 6, wobei die Anweisungen dazu ausgelegt sind, eine oder mehrere Verarbeitungsvorrichtungen zu veranlassen, Operationen durchzuführen, die ferner Folgendes umfassen:
Identifizieren einer oder mehrerer nicht zugewiesener Montageaufgaben (630), die einer oder mehreren der Arbeitsstationen zugewiesen werden können; und
Bestimmen, bei welcher der Arbeitsstationen die nicht zugewiesenen Montageaufgaben (630), falls sie zugewiesen würden, die Abhängigkeiten zwischen den mehreren Montageaufgaben (630) einhalten würden.

9. Einrichtung nach Anspruch 6, wobei die Anweisungen dazu ausgelegt sind, eine oder mehrere Verarbeitungsvorrichtungen zu veranlassen, Operationen durchführen, die ferner Erzeugen der strukturierten Stückliste für den Kabelbaum (511) zumindest teilweise basierend auf dem Kabelbaumentwurf und verfügbaren Fertigungsprozessen umfassen.

10. Einrichtung nach Anspruch 6, wobei die Anweisungen dazu ausgelegt sind, eine oder mehrere Verarbeitungsvorrichtungen zu veranlassen, Operationen durchzuführen, die ferner Erzeugen von Arbeitsanweisungen für jede der Arbeitsstationen in der Produktionslinie (300) umfassen, wobei die Arbeitsanweisungen Operationen beschreiben, die den den Arbeitsstationen zugewiesenen Montageaufgaben (630) entsprechen.

## Revendications

1. Procédé comprenant:
la décomposition (902), par un système informatique, d'une nomenclature structurée pour un faisceau de câbles (511) décrit dans une conception de faisceau en tâches d'assemblage (630), les tâches d'assemblage (630) décrivant des opérations qui, lorsqu'elles sont réalisées, aboutissent à la fabrication du faisceau de câbles (511);
la détermination (903), par le système informatique, de dépendances entre une pluralité de tâches d'assemblage (630), les dépendances étant configurées pour indiquer un ordre de réalisation des opérations associées aux tâches d'assemblage (630); et
l'utilisation, par le système informatique, des dépendances entre la pluralité de tâches d'assemblage (630) lors d'une affectation des tâches d'assemblage (630) à des postes de travail dans une chaîne de production (300) configurée pour fabriquer le faisceau de câbles (511),
la nomenclature structurée pour le faisceau de câbles (511) comportant des définitions de tâches et décrivant des types de matériaux utilisés dans le faisceau de câbles (511), et la décomposition (902) de la nomenclature structurée pour le faisceau de câbles (511) en tâches d'assemblage (630) comprenant en outre la génération des tâches d'assemblage (630) sur la base, au moins en partie, de la définition de tâches et des types de matériaux utilisés dans le faisceau de câbles (511);
la détermination (903) des dépendances comportant l'utilisation des définitions de tâches pour identifier des relations de la tâche d'assemblage (630) générée avec une autre tâche d'assemblage (630); et
le procédé comprenant en outre la détermination, par le système informatique, de règles de dépendance de tâches définissant l'ordre de réalisation des tâches d'assemblage (630) sur la base, au moins en partie, des définitions de tâches, les relations identifiées entre des tâches d'assemblage étant utilisées pour générer des règles de dépendance de tâches, et chaque règle de dépendance de tâches indiquant un ordre de réalisation de multiples tâches d'assemblage en indiquant que la réalisation d'une première tâche d'assemblage respective constitue un prérequis à la réalisation d'une deuxième tâche d'assemblage respective.

2. Procédé selon la revendication 1, comprenant en outre la vérification, par le système informatique, que les tâches d'assemblage (630) affectées au poste de travail respectent les dépendances entre la pluralité des tâches d'assemblage (630).

3. Procédé selon la revendication 1, comprenant en outre:
l'identification, par le système informatique, d'une ou de plusieurs tâches d'assemblage (630) non affectées susceptibles d'être affectées à un ou plusieurs des postes de travail; et
la détermination, par le système informatique, de ceux des postes de travail pour lesquels les tâches d'assemblage (630) non affectées, si elles étaient affectées, respecteraient les dépendances entre la pluralité des tâches d'assemblage (630).

4. Procédé selon la revendication 1, comprenant en outre la génération, par le système informatique, de la nomenclature structurée pour le faisceau de câbles (511) sur la base, au moins en partie, de la conception de faisceau et de processus de fabrication disponibles.

5. Procédé selon la revendication 1, comprenant en outre la génération, par le système informatique, d'instructions de travail pour chacun des postes de travail dans la chaîne de production (300), les instructions de travail décrivant des opérations correspondant aux tâches d'assemblage (630) affectées aux postes de travail.

6. Appareil comportant un dispositif de mémoire stockant des instructions configurées pour amener un ou plusieurs dispositifs de traitement à réaliser des opérations comprenant:
la décomposition d'une nomenclature structurée pour un faisceau de câbles (511) décrit dans une conception de faisceau en tâches d'assemblage (630), les tâches d'assemblage (630) décrivant des opérations qui, lorsqu'elles sont réalisées, aboutissent à la fabrication du faisceau de câbles (511);
la détermination de dépendances entre une pluralité de tâches d'assemblage (630), les dépendances étant configurées pour indiquer un ordre de réalisation des opérations associées aux tâches d'assemblage (630); et
l'utilisation des dépendances entre la pluralité de tâches d'assemblage (630) lors d'une affectation des tâches d'assemblage (630) à des postes de travail dans une chaîne de production (300) configurée pour fabriquer le faisceau de câbles (511),
la nomenclature structurée pour le faisceau de câbles (511) comportant des définitions de tâches et décrivant des types de matériaux utilisés dans le faisceau de câbles (511), et les instructions étant configurées pour amener un ou plusieurs dispositifs de traitement à réaliser des opérations comprenant en outre la génération des tâches d'assemblage (630) sur la base, au moins en partie, de la définition de tâches et des types de matériaux utilisés dans le faisceau de câbles (511);
la détermination (903) des dépendances comportant l'utilisation des définitions de tâches pour identifier des relations de la tâche d'assemblage (630) générée avec une autre tâche d'assemblage (630); et
les instructions étant configurées pour amener un ou plusieurs dispositifs de traitement à réaliser des opérations comprenant en outre la détermination de règles de dépendance de tâches définissant l'ordre de réalisation des tâches d'assemblage (630) sur la base, au moins en partie, des définitions de tâches, les relations identifiées entre des tâches d'assemblage étant utilisées pour générer des règles de dépendance de tâches, et chaque règle de dépendance de tâches indiquant un ordre de réalisation de multiples tâches d'assemblage en indiquant que la réalisation d'une première tâche d'assemblage respective constitue un prérequis à la réalisation d'une deuxième tâche d'assemblage respective.

7. Appareil selon la revendication 6, dans lequel les instructions sont configurées pour amener un ou plusieurs dispositifs de traitement à réaliser des opérations comprenant en outre la vérification que les tâches d'assemblage (630) affectées au poste de travail respectent les dépendances entre la pluralité des tâches d'assemblage (630).

8. Appareil selon la revendication 6, dans lequel les instructions sont configurées pour amener un ou plusieurs dispositifs de traitement à réaliser des opérations comprenant en outre:
l'identification d'une ou de plusieurs tâches d'assemblage (630) non affectées susceptibles d'être affectées à un ou plusieurs des postes de travail; et
la détermination de ceux des postes de travail pour lesquels les tâches d'assemblage (630) non affectées, si elles étaient affectées, respecteraient les dépendances entre la pluralité des tâches d'assemblage (630).

9. Appareil selon la revendication 6, dans lequel les instructions sont configurées pour amener un ou plusieurs dispositifs de traitement à réaliser des opérations comprenant en outre la génération de la nomenclature structurée pour le faisceau de câbles (511) sur la base, au moins en partie, de la conception de faisceau et des processus de fabrication disponibles.

10. Appareil selon la revendication 6, dans lequel les instructions sont configurées pour amener un ou plusieurs dispositifs de traitement à réaliser des opérations comprenant en outre la génération d'instructions de travail pour chacun des postes de travail dans la chaîne de production (300), les instructions de travail décrivant des opérations correspondant aux tâches d'assemblage (630) affectées aux postes de travail.
